# EUROPÄISCHE PATENTSCHRIFT

(11) **EP 0 432 526 B1**
(45) Veröffentlichungstag und Bekanntmachung des Hinweises auf die Patenterteilung: **11.08.1993**
(21) Anmeldenummer: 90122214.1
(22) Anmeldetag: 20.11.1990
(51) Int. Cl.: A47J 36/26, H05B 3/80

(54) **Fertigkost-Wärmer**
Heater for prepared food
Dispositif à chauffer des aliments préparés

(30) Priorität: 14.12.1989 DE 3941331
(43) Veröffentlichungstag der Anmeldung: 19.06.1991
(73) Patentinhaber: STEGO ELEKTROTECHNIK GMBH, D-74523 Schwäbisch Hall (DE)
(72) Erfinder: Eisenhauer, Hartmut, W-7171 Michelfeld (DE)
(74) Vertreter: Bohnenberger, Johannes, Dr.

(56) Entgegenhaltungen:
- DE-A- 3 149 119
- DE-U- 8 414 558
- US-A- 2 483 979
- US-A- 3 064 113

## Beschreibung

Die Erfindung betrifft einen Fertigkost-Wärmer nach dem Oberbegriff des Patentanspruches 1.

Insbesondere dreht es sich bei der Erfindung um ein Gerät zum Aufwärmen von Baby- und/oder Schonkost, die auf dem Markt in Gläsern angeboten wird, welche durch einen Deckel mit einer Art Schraubverschluß verschlossen sind.

Es sind Fertigkost-Wärmer bekannt, bei welchen die Heizeinrichtung ein Gehäuse umfaßt, das einen nach oben offenen, becherartigen Innenraum aufweist, in welchen der Behälter mit der darin befindlichen Nahrung hineingestellt werden kann. Die Heizeinrichtung wärmt die Becherwand auf, wobei zur Übertragung der Wärme von der Becherwand auf den Behälter Wasser in den Becher eingefüllt wird.

Diese Fertigkost-Wärmer werden insofern als nachteilig erachtet, als zum einen die Wärme nur sehr langsam durch die Wand des Behälters in die darin befindliche Nahrung übertragen werden kann, zum anderen die erwähnte Wasserfüllung zur Wärmeübertragung unbedingt notwendig ist. Dies macht solche Fertigkostwärmer umständlich, ja sogar unter Umständen gefährlich in der Handhabung. Für Reisen, insbesondere zur Benutzung im Kfz, sind derartige Fertigkost-Wärmer praktisch ungeeignet.

Aus der DE 84 14 558 U1 ist ein Fertigkost-Wärmer nach dem Oberbegriff des Patentanspruches 1 bekannt. Bei diesem Gerät wird zwar die Wärmeübertragung ohne Wasser bewerkstelligt, so daß die eingangs beschriebenen Nachteile dort nicht zu finden sind, jedoch ist das Gerät äußerst schwer zu reinigen. Dies ist ein erheblicher Nachteil, wobei im Umgang mit Babynahrung die Möglichkeit der einwandfreien Sauberhaltung besonders wichtig ist.

Der Erfindung liegt die Aufgabe zugrunde, einen Fertigkost-Wärmer der eingangs genannten Art dahingehend weiterzubilden, daß unter Beibehaltung einer guten Wärmeübertragung eine einfache und einwandfreie Sauberhaltung gewährleistet wird.

Diese Aufgabe wird durch einen Fertigkost-Wärmer mit den im Patentanspruch 1 angegebenen Merkmalen gelöst.

Ein wesentlicher Punkt der Erfindung liegt also darin, daß der mit dem Nahrungsmittel in Berühurng kommende Übertragungskörper, der vorzugsweise aus Metall (z. B. Aluminium) gefertigt ist, das an seiner Außenfläche mit einem nahrungsmittelechten Kunststoff (z. B. Polytetrafluoräthylen) überzogen (teflonisiert) sein kann, von der Heizeinrichtung lösbar ist, so daß man ihn nach dem Gebrauch abwaschen, ja sogar auskochen kann. Die Heizeinrichtung, die ja mit dem Nahrungsmittel nicht in Verbindung kommt, wird solange abgekoppelt.

Dadurch, daß das Gehäuse und damit der Übertragungskörper am Behälter festsetzbar sind, kann der Fertigkost-Wärmer auch während einer Autofahrt verwendet werden. Es besteht keinerlei Gefahr, da hier keine Wasserfüllung zur Wärmeübertragung benötigt wird.

Der Übertragungskörper weist vorzugsweise flächige Abschnitte auf, die schwertartig in das Nahrungsmittel eintauchbar sind. Vorzugsweise handelt es sich hier um drei bis vier sternförmig von einem Zentralabschnitt nach außen ragende Übertragungsflächen, wobei der Zentralabschnitt sich zu dem in das Nahrungsmittel eintauchbaren freien Ende des Übertragungskörpers hin verjüngt. Durch diese Ausbildung ist einerseits eine sehr große wärmeübertragende Fläche möglich, andererseits bleibt das Verdrängungsvolumen des Körpers gering.

Der Übertragungskörper weist vorzugsweise eine Kopplungsfläche auf, auf welche die Heizeinrichtung mit einer entsprechenden Gegenfläche flächig berührend aufsetzbar ist. Es sind also keine Schraubverbindungen direkt zwischen der Heizeinrichtung und dem Übertragungskörper vorgesehen.

Das gesonderte Gehäuse ist vorzugsweise aus einem schlecht wärmeleitenden Material, z. B. aus Kunststoff, gefertigt. Die Heizeinrichtung ist so im Gehäuse eingebaut, daß keiner ihrer erwärmbaren Teile über die Außenkontur des Gehäuses hervorsteht. Wenn nach dem Gebrauch das gesonderte Gehäuse mit der darin befindlichen, noch heißen Heizeinrichtung vom Übertragungskörper abgenommen wird, so kann man dieses ohne Verletzungsgefahr beiseite legen.

Es sind Halteeinrichtungen vorgesehen, um das Gehäuse zusammen mit dem Übertragungskörper abdichtend auf dem Behälter zu befestigen. Diese können einen am Übertragungskörper befestigten Dichtrand umfassen, der unter Zwischenschaltung einer Dichtung auf einem Schraubgewinde des Behälters festsetzbar ist. Das Gehäuse und der Übertragungskörper weisen hierbei Verbindungseinrichtungen auf, um die beiden Teile gegeneinander zu verriegeln. In diesem Fall setzt man also vor Ingebrauchnahme zunächst den Übertragungskörper mit dem Gehäuse zu einer handhabbaren Einheit zusammen, bevor man die ganze Anordnung auf den Nahrungsmittelbehälter aufsetzt (schraubt). Beim Abnehmen verfährt man in der umgekehrten Reihenfolge.

Der Dichtrand kann einstückig mit dem wärmeleitenden Material des Übertragungskörpers ausgebildet sein. Hierbei sollte das Gehäuse einen den Dichtrand außen übergreifenden Abschnitt aufweisen, so daß man beim Anfassen nicht mit dem heißen Material des Übertragungskörpers in Berührung kommen kann.

Bei einer anderen Ausführungsform der Erfindung ist ein Überwurfring vorgesehen, der den Dichtrand trägt und über welchen das Gehäuse, der Übertragungskörper und der Behälter miteinander verbindbar sind. Entweder ist hierbei der Überwurfring unverlierbar am Übertragungskörper befestigt (mit Spiel oder angegossen) oder ist als gesondertes Teil vorgesehen, über das der Übertragungskörper an das Gehäuse mit der Heizeinrichtung angeflanscht wird. Die Verbindung findet hierbei vorzugsweise über eine Art Bajonett- oder Gewindeverschluß statt, so daß eine Drehbewegung zum Öffnen und Schließen der Verbindung notwendig ist. Der Verschluß ist weiterhin so ausgestaltet, daß beim Verbinden des Übertragungskörpers mit dem Gehäuse der Übertragungskörper fest an die Heizeinrichtung gepreßt wird. Die Gewinde- bzw. Bajonettverschluß-Öffnungsrichtung ist hierbei so (Linksgewinde, Verriegelung) gewählt bzw. ausgebildet, daß beim Aufsetzen und Abnehmen des Gerätes auf einen Behälter mit Schraubverschluß kein Lösen der Verbindung zwischen Übertragungseinrichtung und Gehäuse stattfindet.

Die Dichtung kann gemäß einer bevorzugten Ausführungsform der Erfindung eine verlängerte Dichtlippe aufweisen, die derart ausgebildet ist, daß sie vom Gewindeabschnitt des Behälters in Richtung auf eine Behälter-Schulter ragt, auf dieser im wesentlichen dicht aufsitzt und einen Ausgleichsraum zwischen Dichtlippe und Behälter definiert. Dadurch ist gewährleistet, daß gegebenenfalls austretende Nahrungsmittelteile aufgefangen werden.

Vorzugsweise weist das Gehäuse einen im wesentlichen geschlossenen Innenraum auf, in dessen Boden eine Öffnung vorgesehen ist. Die Heizeinrichtung umfaßt eine Endfläche und ist so auf dem Boden im Innenraum des Gehäuses befestigt, daß die Öffnung in wesentlichen durch diese Endfläche dicht abgeschlossen ist. Das einzige "heiße Teil", das von außen zugänglich ist, wird also von dem Abschnitt der Endfläche der Heizeinrichtung gebildet, der von der Öffnung freigegeben ist. Mit diesem Flächenabschnitt kommt ein entsprechender Flächenabschnitt der Übertragungskörpers in Kontakt. Auf diese Weise kann die Heizeinrichtung im wesentlichen feuchtigkeitsdicht im Gehäuse eingekapselt sein. Vorteilhafterweise fertigt man das Gehäuse im wesentlichen aus zwei Stücken, wobei das eine Stück einen Rand umfaßt, der an einem Ende über einen Deckel verschließbar ist. Im Gehäuse, insbesondere auf dem dort vorgesehenen Boden, sind in den Innenraum ragend Haltekrallen angebracht, die so ausgebildet sind, daß man die Heizeinrichtung in die Halteeinrichtung drücken und mit Schnappsitz einrasten lassen kann. Nach dem Einbau der Heizeinrichtung wird der Deckel aufgesetzt und z. B. mit dem Gehäuserand verklebt oder verschweißt.

Vorzugsweise umfaßt die Heizeinrichtung ein PTC-Element, also einen Halbleiter-Heizkörper, dessen Widerstand bei Erreichen einer definierten Temperatur sprunghaft ansteigt. Durch diese Charakteristik ist gewährleistet, daß das Element bis zum Erreichen der definierten Temperatur eine hohe elektrische Leistung aufnimmt, ab Erreichen der definierten Temperatur aber nur noch eine sehr geringe Leistung. Dadurch wird ein thermostatisches Verhalten gewährleistet. Das PTC-Element ist auf einer Montageplatte befestigt.

Die Wärmeableitung ist dann besonders effizient, wenn das PTC-Element zwischen zwei Schmalseiten von Kopplungskörpern eingespannt wird, die mit (größerflächigen) Seiten, welche senkrecht zu den Schmalseiten stehen, auf der Montageplatte aufliegen. Dadurch ist eine gleichmäßige Wärmeableitung von beiden Flächen des PTC-Elements gewährleistet, was wiederum sicherstellt, daß die definierte Knick-Temperatur des PTC-Elementes exakt eingehalten bzw. vom gesamten Heizelement eingehalten wird. Weiterhin ist die Wärmeableitung, die sozusagen "um die Ecke" erfolgt, aufgrund der zur Verfügung stehenden Flächen sehr gut. Die so erzielbare Wärmeleistung ist darum optimal.

Die Zuführung von Strom zu dem PTC-Element geschieht direkt über die Kopplungskörper. Jeder der Kopplungskörper ist darum mit einer der Zuführungsleitungen verbunden, wobei die Gesamtanordnung, bestehend aus den Kopplungskörpern und dem PTC-Element gegenüber der Montageplatte isoliert ist. Zur Befestigung der Kopplungskörper mit dem PTC-Element eignet sich ganz besonders eine Montageplatte, die einen flächig ausgebildeten Abschnitt und zwei im wesentlichen senkrecht nach oben stehende Haltekrallen aufweist. Die Kopplungskörper mit dem dazwischen liegenden PTC-Element werden zwischen die beiden Haltekrallen gelegt, wobei die Abmessung zwischen den beiden Haltekrallen entsprechend der Abmessung des Körpers, bestehend aus den Kopplungskörpern und dem PTC-Element, gewählt ist. Zur Isolierung wird zwischen die Kopplungskörper mit dem PTC-Element und die Montageplatte mit den Haltekrallen eine isolierende Kunststoffolie eingelegt. Nach dem Einlegen biegt man die Haltekrallen zusammen, so daß die beiden Kopplungskörper unter Einklemmung des PTC-Elements gegeneinander verspannt und auf die Unterlage, nämlich die Montageplatte gedrückt werden. Vorzugsweise werden zu diesem Zweck die Kopplungskörper so geformt, daß ihre dem PTC-Element gegenüberliegenden Ränder schräg aufeinander zulaufend ausgebildet sind, so daß die Haltekrallen nach dem Zusammenbiegen einen entsprechenden Haltedruck von oben auf die Kopplungskörper in Richtung auf die Montageplatte ausüben können.

Nachfolgend werden bevorzugte Ausführungsformen der Erfindung anhand von Abbildungen beschrieben. Hierbei zeigt:
- Fig. 1: einen Längsschnitt entlang der Linie I-I in Fig. 2 durch eine erste bevorzugte Ausführungsform der Erfindung,
- Fig. 2: eine Ansicht entlang der Linie II-II aus Fig. 1,
- Fig. 3: einen Längsschnitt durch das Gehäuse mit darin befindlichem Heizelement,
- Fig. 4: eine Ansicht entsprechend der Linie IV-IV aus Fig. 1 ohne Gehäusedeckel,
- Fig. 5: einen Teil-Längsschnitt entlang der Linie V-V aus Fig. 6 durch eine weitere Ausführungsform der Erfindung,
- Fig. 6: eine Ansicht auf das Gehäuse, entsprechend der Linie VI-VI aus Fig. 5 ohne aufgesetzten Gehäusedeckel und ohne Heizeinrichtung,
- Fig. 7: einen Teil-Längsschnitt durch eine weitere Ausführungsform der Erfindung.

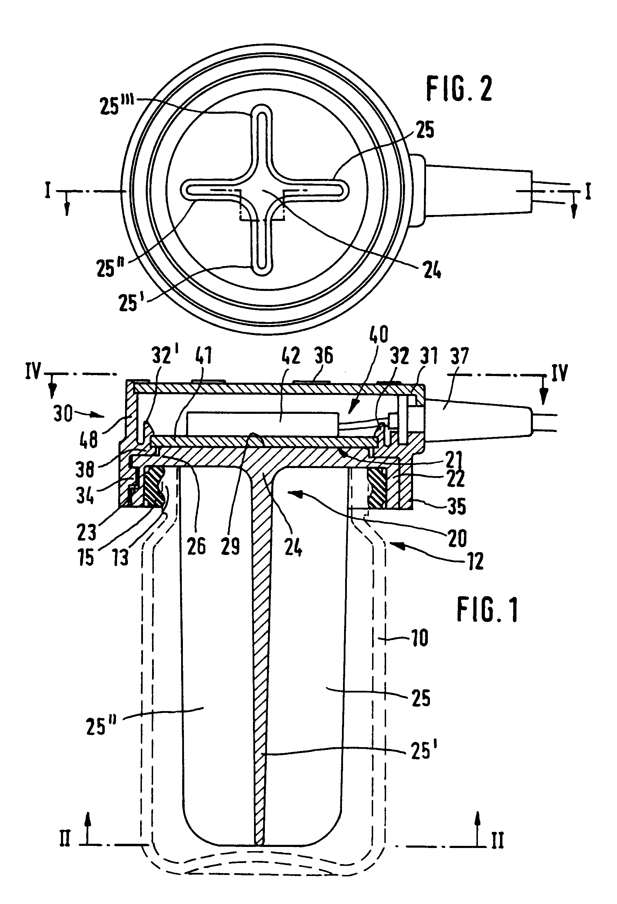

Wie aus den Fig. 1 bis 4 hervorgeht, umfaßt diese erste Ausführungsform des erfindungsgemäßen Fertigkost-Wärmers ein Gehäuse 30 mit einer darin sitzenden Heizeinrichtung 40, deren Heizelement 42 mit einem Wärme-Übertragungskörper 20 in Verbindung steht. Der Wärme-Übertragungskörper 20 weist (bei dieser Ausführungsform) vier flächige Abschnitte 25 - 25‴ auf, die sternförmig von einem Zentralabschnitt 24 radial nach außen ragen. Der Zentralabschnitt 24 verjüngt sich, ausgehend von einer in Fig. 1 oberen Kopplungsfläche 21 nach unten. Gleiches gilt für die Dicke der flächigen Abschnitte 25 - 25‴. Dadurch ist ein der zu übertragenden Wärmemenge entsprechender Querschnittsverlauf gewährleistet, wobei gleichzeitig der Übertragungskörper 20 eine minimale Verdrängung aufweist.

An seinem Oberende, auf welchem die Kopplungsfläche 21 ausgebildet ist, weist der Übertragungskörper 20 einen tellerförmigen Abschnitt auf, der einen nach unten in Richtung auf das Körperende ragenden Dichtrand 22 trägt. Der Dichtrand 22 ist so dimensioniert und kreisringförmig ausgebildet, daß er unter Zwischenlage einer Dichtung 15 auf dem Schraubgewinde 13 eines Behälters 10 aufsetzbar bzw. aufschraubbar ist und dann fest auf diesem hält. Im so aufgesetzten Zustand ist der Innenraum des Behälters 10 durch den Übertragungskörper 20 (bzw. dessen Endteil) dicht abgeschlossen, da eine entsprechende Sitzfläche 26 des Übertragungskörpers 20 auf dem Oberrand des Behälters 10 aufsitzt.

Das Gehäuse 30 ist im wesentlichen rotationssymmetrisch ausgebildet und weist einen Boden 38 auf, in welchem mittig bzw. konzentrisch zur Außenkontur eine Öffnung 39 ausgebildet ist. Die obere Endfläche des Gehäuses 30 wird von einem Deckel 31 gebildet, der auf den Rand 48 des Gehäusekörpers aufsetzbar und mit diesem fest verbindbar (Schweißung, Klebung) ist.

Vom Boden 38 ragt am Rand der Öffnung 39 in den so gebildeten Innenraum des Gehäuses 30 ein Paar von Haltekrallen 32, 32', die einander zugewandte Haken umfassen.

In die Haltekrallen 32, 32' ist eine Montageplatte 41 mit ihren Rändern einsetzbar. Diese Montageplatte 41 ist aus Aluminium oder einem ähnlich gut leitenden Material gefertigt, wobei sich ein Stranggußverfahren zur Herstellung besonders gut eignet.

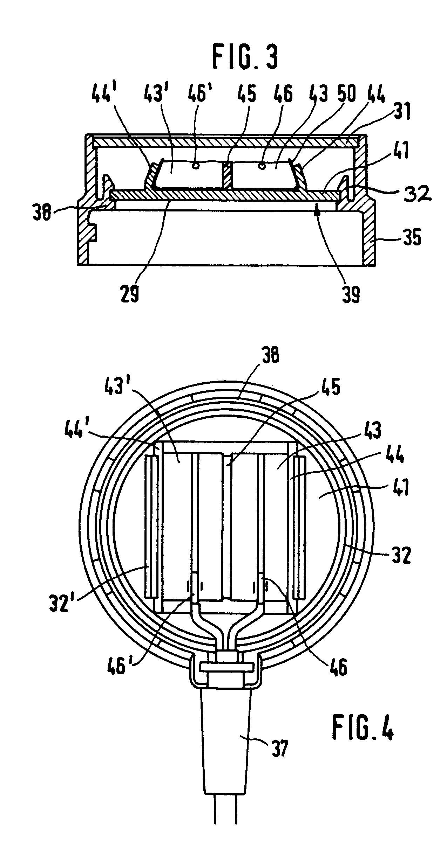

Die Montageplatte 41 weist auf ihrer einen Seite (in den Abbildungen die Unterseite) eine im wesentlichen plane Endfläche 29 auf, die (von unten in Fig. 3 gesehen) durch die Öffnung 39 freigegeben wird.

Auf ihrer Oberseite trägt die Montageplatte 41 nach oben ragende Haltekrallen 44, 44', die im Grundzustand der Montageplatte 41, also vor Einbau der weiteren Bauteile, die zusammen das Heizelement 42 bilden, senkrecht von der Montageplatte 41 nach oben stehen.

Die Abstände der beiden Haltekrallen 44, 44' voneinander sind so bemessen, daß der von ihnen gebildete U-förmige Innenraum zunächst mit einer Folie 50 aus isolierendem Material belegt und dann zwei Kopplungskörper 43, 43' mit mindestens einem dazwischen liegendem PTC-Element 45 einsetzbar sind. Die Kopplungskörper 43, 43' sind mit Nuten in ihren Oberflächen versehen, in welche Leitungsanschlüsse 46, 46' zur Zuführung von elektrischem Strom einlegbar sind, die dann durch eine entsprechende Materialverformung festgeklemmt werden können.

Die dem PTC-Element 45 abgewandten Ränder der Kopplungs-körper 43, 43' laufen, wie in Fig. 3 gezeigt, sich nach oben verjüngend aufeinander zu, so daß die Haltekrallen 44, 44' nach dem Einlegen der Folie 50, der Kopplungskörper 43, 43' und des PTC-Elements 45 nach innen gebogen werden können. Auf diese Weise wird ein besonders sicherer Sitz der Kopplungskörper 43, 43' auf der Montageplatte 41 bei gleichzeitiger Einpressung des PTC-Elements 45 gewährleistet.

Die Leitungsanschlüsse 46, 46' gehen (in einem Kabel) durch eine Anschlußtülle 37 zu einem nicht gezeigten Stecker. Die Anschlußtülle 37 ist in einer entsprechend geformten Ausnehmung im Gehäuserand 48 und einem Endteil des Deckels 31 im Gehäuse 30 gehalten.

Das Gehäuse 30 weist in seinem unteren Bereich einen nach unten ragenden Rand 35 auf, der so weit hervorsteht, daß er den Dichtrand 22 überdeckt. Auf diese Weise ist sichergestellt, daß kein Teil des Übertragungskörpers 20, das in Betrieb der Vorrichtung heiß wird, versehentlich berührt werden kann.

Zur Verbindung des Gehäuses 30 mit dem Übertragungskörper 20 ist eine Art Bajonettverschluß, bestehend aus einer radial nach innen ragenden Verschlußnase 34 am Rand 35 und einer radial nach außen offenen Nut 23 im Dichtrand 22 des Übertragungskörpers 20 gebildet. Dieser Verschluß ist hierbei so geformt, daß beim Einsetzen des Übertragungskörpers 20 in das Gehäuse 30 die Kopplungsfläche 21 des Übertragungskörpers 20 fest auf die Endfläche 29 der Montageplatte 41 gepreßt wird, so daß der Übergangswiderstand zwischen den beiden Elementen nur gering ist.

Um das Gehäuse 30 mit nach oben ragendem Behälter 10 auf eine ebene Fläche stellen zu können, sind auf dem Deckel 31 Füßchen 36 vorgesehen. In dieser Position kann auch nach dem Aufwärmen das Gehäuse 30 mit noch daran befindlichem Wärmeübertragungskörper 20 auf den Tisch gestellt werden.

Sobald dann der Übertragungskörper 20 hinreichend abgekühlt ist, löst man die Bajonettverbindung 23/34 und kann ggf. an den Übertragungsflächen 25-25‴ klebende Reste abspülen bzw. den Übertragungskörper 20 (zusammen mit der Dichtung 15) in die Spülmaschine stecken.

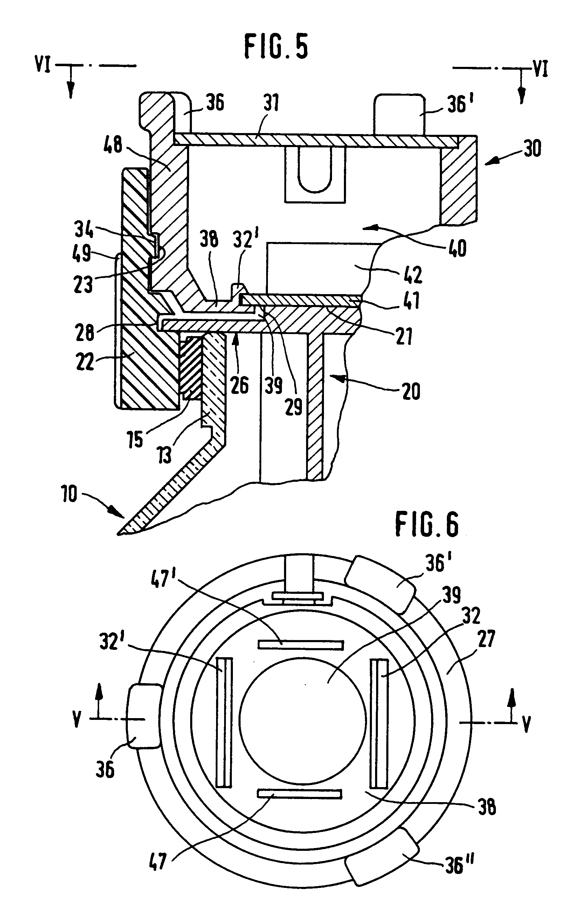

Im folgenden wird eine weitere Ausführungsform der Erfindung anhand der Figuren 5 und 6 beschrieben. Diese unterscheidet sich von der zuvor gezeigten Ausführungsform dadurch, daß der Dichtrand 22 zum Befestigen des Wärmeübertragungskörpers 20 auf dem Schraubgewinde 13 des Behälters 10 nicht einstückig mit den eigentlichen wärmeübertragenden Teilen ausgebildet, sondern als gesondertes Kunststoff-Teil geformt ist. Die Endplatte des Übertragungskörpers 20 (die eine im wesentlichen kreisrunde Außenkontur besitzt) kann, wie in Fig. 5 gezeigt, in einen Schnappsitz mit einer Auflage 28 eingepreßt sein. Dieser Sitz ist mit einem gewissen Spiel ausgestattet, so daß man aus dem Spalt zwischen dem Metall-Körper und dem ihn umgebenden Kunststoff-Teil Essensreste leicht herausspülen kann. Selbstverständlich ist es auch möglich, das Kunststoff-Teil an das Metallteil anzugießen bzw. anzuspritzen.

Der "Bajonettverschluß", bestehend aus der Verschlußnase 34 und der entsprechenden Nut 23, ist bei dieser Ausführungsform der Erfindung zwischen dem Kunststoff-Teil des Wärmeüber-tragungskörpers 20 und dem Gehäuserand 48 ausgebildet.

Zur Handhabung der Gesamtanordnung, bestehend aus dem Gehäuse 30 mit daran angesetztem Wärmeübertragungskörper 20, ist am Außenumfang des Dichtrandes 22 eine Riffelung 49 vorgesehen. Um das Gehäuse 30 vom Wärmeübertragungskörper 20 zu trennen, sind die auch hier am Rand 48 des Gehäuses 30 vorgesehenen Füßchen 36-36'' verlängert und nach außen hervorkragend ausgebildet. Gleichzeitig stellen die Füßchen 36-36'' sichere Abstellelemente dar. Durch diese Formgebung ist gewährleistet, daß einerseits die Gesamtanordnung korrekt handhabbar (an der Riffelung 49) ist, andererseits aber eine leichte Trennung des Gehäuses 30 vom Wärmeübertragungskörper 20 bewerkstelligt werden kann.

In jedem Fall ist aber der Oberrand des metallischen Teils des Wärmeübertragungskörpers 20 so breit bzw. radial so weit hervorstehend angeordnet, daß eine Abdichtung zwischen dem Oberrand des Behälters 10 und dem Metallteil bzw. dessen Sitzfläche 26 sichergestellt ist. Auf diese Weise kann der Inhalt des Behälters 10 nicht mit dem Gehäuse 30, insbesondere nicht mit der Endfläche 29 der Montageplatte 41 in Berührung kommen.

Zur Befestigung der Montageplatte 41 auf dem Boden 38 des Gehäuses 30 sind auch hier wieder die zwei Haltekrallen 32, 32' vorgesehen, die hier jedoch geradlinig verlaufen. Darüber hinaus sind Justiernasen 47, 47' auf dem Boden 38 angeordnet, welche die Montageplatte 41 in der durch die Haltekrallen 32, 32' nicht definierten Richtung sichern.

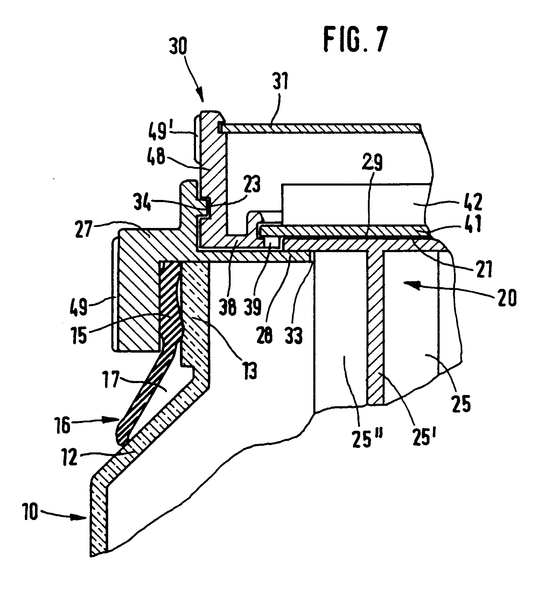

Bei der in Fig. 7 gezeigten Ausführungsform der Erfindung ist ein gesonderter Überwurfring 27 vorgesehen, um den Wärmeübertragungskörper 20 mit dem Gehäuse 30 zu verbinden bzw. die Kopplungsfläche 21 des Wärmeübertragungskörpers 20 auf die Endfläche 29 der Montageplatte 41 zu pressen. Hierfür weist der Überwurfring 27 eine plattenförmige Auflage 28 mit einer zentralen Bohrung 33 auf. Die zentrale Bohrung 33 ist so bemessen, daß die Ränder der flächigen Abschnitte 25-25‴ relativ eng in der Bohrung 33 sitzen. Somit ist der Wärmeübertragungskörper 20 relativ zum Überwurfring 27 zentriert.

Die Bajonett-Verschlußelemente 23/34 befinden sich im Rand 48 des Gehäuses 30 bzw. in einem nach oben ragenden Endstutzen des Überwurfrings 27.

Die Ausführungsformen nach den Fig. 5 - 7 sind insbesondere dann zu bevorzugen, wenn der Fertigkost-Wärmer zum Aufsetzen auf Behälter 10 mit verschiedenen Formaten bzw. Durchmessern ausgebildet werden soll.

Eine weitere Besonderheit der Ausführungsform nach Fig. 7, die selbstverständlich auch bei den zuvor gezeigten Ausführungsformen anwendbar ist, liegt in der besonderen Ausbildung der Dichtung 15. Diese weist eine nach unten trichterförmig divergierende Dichtlippe 16 auf, die so ausgebildet ist, daß sie auf einer Schulter 12 eines Behälters 10, wie in Fig. 7 gezeigt, aufliegen kann. Dadurch wird zwischen der Dichtlippe 16 und der Außenfläche des Behälters 10 ein Ausgleichsraum 17 gebildet. Kommt es beim Erwärmen des Behälterinhalts zu einem Überlaufen, so werden im Raum 17 die Speisereste aufgefangen.

Zur leichteren Handhabung sind auch bei der in Fig. 7 gezeigten Ausführungsform Riffelungen 49 (am Überwurfring 27) bzw. 49' (am Gehäuserand 48) vorgesehen.

## Patentansprüche

1. Fertigkost-Wärmer, insbesondere für Baby- und/oder Schonkost, wobei ein Nahrungsmittel in einem öffenbaren, festen Behälter (10) enthalten ist, umfassend
eine elektrische Heizeinrichtung (40), der über Leitungsanschlüsse Energie zuführbar ist und die Wärmeübertragungseinrichtungen umfaßt, um Wärme von der Heizeinrichtung (40) in das zu erwärmende flüssige oder pastöse Nahrungsmittel zu übertragen,
einen in das Nahrungsmittel eintauchbaren Übertragungskörper (20), der aus einem festen, wärmeleitenden Material gefertigt ist und
ein Gehäuse (30), das am Behälter (10) festsetzbar ist,
**dadurch gekennzeichnet,**
daß die im Gehäuse (30) angeordnete Heizeinrichtung (40) lösbar mit dem Übertragungskörper (20) verbunden ist.

2. Fertigkost-Wärmer nach Anspruch 1,
**dadurch gekennzeichnet,**
daß der Übertragungskörper (20) flächige Abschnitte (25 - 25‴) aufweist, die schwertartig in das Nahrungsmittel eintauchbar sind.

3. Fertigkost-Wärmer nach Anspruch 2,
**dadurch gekennzeichnet,**
daß der Übertragungskörper (20) mehrere, vorzugsweise 3 oder 4 sternförmig von einem Zentralabschnitt (24) nach außen ragende flächige Abschnitte (25-25‴) aufweist.

4. Fertigkost-Wärmer nach Anspruch 3,
**dadurch gekennzeichnet,**
daß der Zentralabschnitt (24) sich zu dem in das Nahrungsmittel eintauchbaren freien Ende des Übertragungskörpers (20) hin verjüngend ausgebildet ist.

5. Fertigkost-Wärmer nach einem der Ansprüche 2 bis 4,
**dadurch gekennzeichnet,**
daß der Übertragungskörper (20) eine Kopplungsfläche (21) aufweist, auf welche die Heizeinrichtung (40) mit einer entsprechenden Gegenfläche (Endfläche 29) flächig berührend aufsetzbar ist.

6. Fertigkost-Wärmer nach einem der vorhergehenden Ansprüche,
**dadurch gekennzeichnet,**
daß das gesonderte Gehäuse (30) aus schlecht wärmeleitendem Material, vorzugsweise aus Kunststoff besteht, und daß die Heizeinrichtung (40) derart im Gehäuse (30) eingebaut ist, daß keiner ihrer erwärmbaren Teile über die Außenkontur des Gehäuses (30) hervorsteht.

7. Fertigkost-Wärmer nach einem der vorhergehenden Ansprüche,
**dadurch gekennzeichnet,**
daß Halteeinrichtungen (22, 35, 27, 15) vorgesehen sind, um das Gehäuse (30) zusammen mit dem Übertragungskörper (20) abdichtend auf dem Behälter (10) zu befestigen.

8. Fertigkost-Wärmer nach Anspruch 7,
**dadurch gekennzeichnet,**
daß die Halteeinrichtungen einen am Übertragungskörper befestigten Dichtrand (22) umfassen, der unter Zwischenschaltung einer Dichtung (15) auf einem Schraubgewinde (13) des Behälters (10) festsetzbar ist, und daß das Gehäuse (30) und der Übertragungskörper (20) Verbindungseinrichtungen (23, 34) aufweisen, um die beiden Teile gegeneinander zu verriegeln.

9. Fertigkost-Wärmer nach Anspruch 8,
**dadurch gekennzeichnet,**
daß der Dichtrand (22) einstückig mit dem wärmeleitenden Material des Übertragungskörpers (20) ausgebildet ist, und daß das Gehäuse (30) einen den Dichtrand (22) außen übergreifenden Abschnitt (35) aufweist (Fig. 1 - 4).

10. Fertigkost-Wärmer nach Anspruch 8,
**dadurch gekennzeichnet,**
daß ein Überwurfring (27) vorgesehen ist, der den Dichtrand (22) trägt und über welchen das Gehäuse (30), der Übertragungskörper (20) und der Behälter (10) miteinander verbindbar sind (Figuren 5, 7).

11. Fertigkost-Wärmer nach Anspruch 10,
**dadurch gekennzeichnet,**
daß der Überwurfring (27) unverlierbar am Übertragungskörper (20) befestigt ist (Fig. 5).

12. Fertigkost-Wärmer nach einem der Ansprüche 8 bis 11,
**dadurch gekennzeichnet,**
daß die Dichtung (15) eine verlängerte Dichtlippe (16) aufweist, die derart ausgebildet ist, daß sie vom Schraubgewinde (13) des Behälters (10) in Richtung auf eine Behälter-Schulter (12) ragt, auf dieser dicht aufsitzt und einen Ausgleichsraum (17) zwischen Dichtlippe (16) und Behälter (10) definiert.

13. Fertigkost-Wärmer nach einem der vorhergehenden Ansprüche,
**dadurch gekennzeichnet,**
daß das Gehäuse (30) einen im wesentlichen geschlossenen Innenraum mit einem Boden (38) aufweist, in welchem eine Öffnung (39) vorgesehen ist, und daß die Heizeinrichtung (20) mit ihrer Endfläche (29) so auf dem Boden (38) im Innenraum des Gehäuses (30) befestigt ist, daß die Öffnung (39) im wesentlichen durch die Endfläche (29) dicht abgeschlossen ist.

14. Fertigkost-Wärmer nach Anspruch 13,
**dadurch gekennzeichnet,**
daß das Gehäuse (30) einen mit einem Absatz versehenen Rand (48) aufweist, der an einem Ende über einen Deckel (31) materialschlüssig verschlossen ist.

15. Fertigkost-Wärmer nach einem der Ansprüche 13 oder 14,
**dadurch gekennzeichnet,**
daß die Heizeinrichtung (40) in Haltekrallen (32, 32'), die im Gehäuse (30) vorgesehen sind, einsetzbar ist.

16. Fertigkost-Wärmer nach einem der vorhergehenden Ansprüche,
**dadurch gekennzeichnet,**
daß die Heizeinrichtung (40) mindestens ein PTC-Element (45) umfaßt, das auf einer Montageplatte (41) befestigt ist.

17. Fertigkost-wärmer nach Anspruch 16,
**dadurch gekennzeichnet,**
daß die Heizeinrichtung (40) zwei Kopplungskörper (43, 43') umfaßt, die beide mit ersten (bzw. Unter-) Flächen auf der Montageplatte (41) aufliegen und die rechtwinklig zu diesen verlaufende Kontaktflächen aufweisen, zwischen denen das PTC-Element (45) einspannbar ist.

18. Fertigkost-Wärmer nach Anspruch 17,
**dadurch gekennzeichnet,**
daß die Kopplungskörper (43, 43') mit jeweils einem Leitungsanschluß (46, 46') verbunden, gegenüber dem PTC-Element (45) unisoliert, aber gegenüber der Montageplatte (41) isoliert gehalten sind.

19. Fertigkost-Wärmer nach einem der Ansprüche 17 oder 18,
**dadurch gekennzeichnet,**
daß die Kopplungskörper (43, 43') über plastisch verformbare Haltekrallen (44, 44') gegeneinander verspannt auf der Montageplatte (41) befestigt sind, die einstückig mit der Montageplatte (41) verbunden sind.

20. Fertigkost-Wärmer nach Anspruch 19,
**dadurch gekennzeichnet,**
daß die Kopplungskörper (43, 43') dem PTC-Element (45) gegenüberliegende Wandabschnitte aufweisen, die von der Montageplatte (41) aus gesehen konvergierend geformt sind.

21. Fertigkost-Wärmer nach einem der Ansprüche 17 bis 20,
**dadurch gekennzeichnet,**
daß zwischen der Montageplatte (41) sowie gegebenenfalls den Haltekrallen (44, 44') und den Kopplungskörpern (43, 43') mit dem PTC-Element (45) eine Folie (50) aus isolierendem Material angeordnet ist.

## Claims

1. Heater for prepared food, particularly baby and/or invalid food, a food being contained in an openable, rigid container (10), comprising
an electric heating device (40), to which energy can be supplied via cable connections and which comprises heat transmission devices, in order to transmit heat from the heating device (40) into the liquid or pasty food that is to be heated,
a transmission body which can be inserted into the food and which is made of a rigid, heat-conducting material and
a housing (30) which can be fixed onto the container (10), characterized in that the heating device (40) arranged in the housing (30) is detachably connected to the transmission body (20).

2. Heater for prepared food according to Claim 1, characterized in that the transmission body (20) has flat sections (25 - 25‴) which can be inserted swordlike into the food.

3. Heater for prepared food according to Claim 2, characterized in that the transmission body (20) has several, preferably 3 or 4 flat sections (25 - 25‴) which project outwards from a central section (24) in the shape of a star.

4. Heater for prepared food according to Claim 3, characterized in that the central section (24) is designed so as to taper towards the free end of the transmission body (20) which can be inserted into the food.

5. Heater for prepared food according to one of Claims 2 to 4, characterized in that the transmission body (20) has a coupling surface (21) onto which the heating device (40) can be placed flat and so as to be in contact with it, by means of a corresponding counter-surface (end surface 29).

6. Heater for prepared food according to one of the preceding Claims, characterized in that the separate housing (30) consists of material that is a poor conductor of heat, preferably of plastic, and that the heating device (40) is installed in the housing (30) in such a way that none of its heatable parts project beyond the outer contour of the housing (30).

7. Heater for prepared food according to one of the preceding Claims, characterized in that retaining devices (22, 35, 27, 15) are provided in order to secure and seal the housing (30) together with the transmission body (20) onto the container (10).

8. Heater for prepared food according to Claim 7, characterized in that the retaining devices comprise a sealing edge (22) fixed to the transmission body which, by inserting a seal (15), can be fixed onto a screw thread (13) on the container (10) and that the housing (30) and the transmission body (20) have connecting devices (23, 34) in order to lock the two parts with respect to each other.

9. Heater for prepared food according to Claim 8, characterized in that the sealing edge (22) is designed so as to form a single unit with the heat-conducting material of the transmission body (20) and that the housing (30) has a section (35) which overlaps the sealing edge (22) on the outside (Figs. 1-4).

10. Heater for prepared food according to Claim 8, characterized in that a coupling ring (27) is provided which carries the sealing edge (22) and via which the housing (30), the transmission body (20) and the container (10) can be connected to each other (Figs. 5, 7).

11. Heater for prepared food according to Claim 10, characterized in that the coupling ring (27) is captively secured to the transmission body (20) (Fig. 5).

12. Heater for prepared food according to one of Claims 8 to 11, characterized in that the seal (15) has an extended sealing lip (16) which is designed in such a way that it projects from the screw thread (13) on the container (10) in the direction of a container shoulder (12), rests on this in a leak-tight manner and defines an equalizing space (17) between sealing lip (16) and container (10).

13. Heater for prepared food according to one of the preceding Claims, characterized in that the housing (30) has an essentially enclosed interior space with a base (38) in which an opening (39) is provided and that the heating device (20) is fixed onto the base (38) in the interior space of the housing (30) with its end surface (29) in such a way that the opening (39) is essentially sealed tight by the end surface (29).

14. Heater for prepared food according to Claim 13, characterized in that the housing (30) has an edge (48), provided with a shoulder, which is sealed at one end via a cover (31), by material constraint.

15. Heater for prepared food according to one of Claims 13 or 14, characterized in that the heating device (40) can be inserted into retaining claws (32, 32') which are provided in the housing (30).

16. Heater for prepared food according to one of the preceding Claims, characterized in that the heating device (40) comprises at least one PTC element (45) which is fixed onto a mounting plate (41).

17. Heater for prepared food according to Claim 16, characterized in that the heating device (40) comprises two coupling bodies (43, 43'), both of which rest on the mounting plate (41) with initial (or lower) surfaces and which have contact surfaces at right angles to these surfaces, between which the PTC element (45) can be clamped.

18. Heater for prepared food according to Claim 17, characterized in that the coupling bodies (43, 43') each connected to a cable connection (46, 46'), are kept uninsulated with respect to the PTC element (45) but insulated with respect to the mounting plate (41).

19. Heater for prepared food according to one of Claims 17 or 18, characterized in that the coupling bodies (43, 43') are secured onto the mounting plate (41) so as to be tensioned with respect to each other, via plastically deformable retaining claws (44, 44'), which are connected to the mounting plate (41) so as to form a single unit with it.

20. Heater for prepared food according to Claim 19, characterized in that the coupling bodies (43, 43') have wall sections opposite the PTC element (45) which are shaped so as to be converging when viewed from the mounting plate (41).

21. Heater for prepared food according to one of Claims 17 to 20, characterized in that a film (50) of insulating material is arranged between the mounting plate (41) and if necessary the retaining claws (44, 44') and the coupling bodies (43, 43') with the PTC element (45).

## Revendications

1. Dispositif pour chauffer des aliments préparés, des aliments pour bébés et/ou de régime notamment, un aliment étant contenu dans un récipient (10) fixe, qui peut être ouvert, avec un dispositif de chauffage électrique (40), qui peut être alimenté en énergie par des raccordements de ligne et comporte des dispositifs de transfert thermique, pour transmettre la chaleur du dispositif de chauffage (40) à l'aliment liquide ou pâteux à réchauffer, avec un corps de transfert (20), qui peut être immergé dans l'aliment et se compose d'un matériau résistant, conducteur de chaleur, et avec un boîtier (30), qui peut être fixé sur le récipient (10), caractérisé en ce que le dispositif de chauffage (40), disposé dans le boîtier (30), est assemblé d'une manière amovible avec le corps de transfert (20).

2. Dispositif pour chauffer des aliments préparés suivant la revendication 1, caractérisé en ce que le corps de transfert (20) présente des sections planes (25 - 25‴), qui peuvent être immergées dans l'aliment à la manière d'une épée.

3. Dispositif pour chauffer des aliments préparés suivant la revendication 2, caractérisé en ce que le corps de transfert (20) présente plusieurs sections planes (25 - 25‴) en forme d'étoile, 3 ou 4 de préférence, s'étendant d'une section centrale (24) en direction de l'extérieur.

4. Dispositif pour chauffer des aliments préparés suivant la revendication 3, caractérisé en ce que la section centrale (24) est rétrécie en direction de l'extrémité libre du corps de transfert (20), immergée dans l'aliment.

5. Dispositif pour chauffer des aliments préparés suivant l'une quelconque des revendications 2 à 4, caractérisé en ce que le corps de transfert (20) présente une surface d'accouplement (21), sur laquelle le dispositif de chauffage (40) peut avoir un contact plan, par une contre-surface correspondante (surface extrême 29).

6. Dispositif pour chauffer des aliments préparés suivant l'une quelconque des revendications précédentes, caractérisé en ce que le boîtier séparé (30) se compose d'un matériau de faible conductivité thermique, de matière plastique de préférence, et en ce que le dispositif de chauffage (40) est logé dans le boîtier (30), de manière qu'aucune de ses parties, pouvant être chauffée, ne dépasse du contour externe du boîtier (30).

7. Dispositif pour chauffer des aliments préparés suivant l'une quelconque des revendications précédentes, caractérisé par des dispositifs de fixation (22, 35, 27, 15), prévus pour fixer le boîtier (30) sur le récipient (10), d'une manière hermétique, avec le corps de transfert (20).

8. Dispositif pour chauffer des aliments préparés suivant la revendication 7, caractérisé en ce que les dispositifs de fixation comportent un rebord d'étanchéité (22), fixé sur le corps de transfert et pouvant être fixé, avec un joint (15) intercalaire, sur un filetage (13) du récipient (10), et en ce que le boîtier (30) et le corps de transfert (20) présentent des dispositifs d'assemblage (23, 34), pour un verrouillage mutuel des deux pièces.

9. Dispositif pour chauffer des aliments préparés suivant la revendication 8, caractérisé en ce que le rebord d'étanchéité (22) est réalisé d'une seule pièce avec le matériau conducteur de chaleur du corps de transfert (20), et en ce que le boîtier (30) présente une section (35), recouvrant de l'extérieur le rebord d'étanchéité (22) (figures 1 - 4).

10. Dispositif pour chauffer des aliments préparés suivant la revendication 8, caractérisé par une collerette de fixation (27), qui supporte le rebord d'étanchéité (22) et permet d'assembler le boîtier (30), le corps de transfert (20) et le récipient (10) (figures 5, 7).

11. Dispositif pour chauffer des aliments préparés suivant la revendication 10, caractérisé par une fixation imperdable de la collerette (27) sur le corps de transfert (20) (figure 5).

12. Dispositif pour chauffer des aliments préparés suivant l'une quelconque des revendications 8 à 11, caractérisé en ce que le joint (15) présente une lèvre d'étanchéité (16) prolongée, réalisée de sorte qu'elle s'étend du filetage (13) du récipient (10) en direction d'un épaulement (12) du récipient, s'applique hermétiquement sur ce dernier et définit une chambre de compensation (17) entre la lèvre d'étanchéité (16) et le récipient (10).

13. Dispositif pour chauffer des aliments préparés suivant l'une quelconque des revendications précédentes, caractérisé en ce que le boîtier (30) présente un compartiment interne essentiellement fermé avec un fond (38), dans lequel est prévue une ouverture (39), et en ce que le dispositif de chauffage (40) est fixé par sa surface extrême (29) sur le fond (38), dans le compartiment interne du boîtier (30), de sorte que l'ouverture (39) est essentiellement fermée, d'une manière hermétique, par la surface extrême (29).

14. Dispositif pour chauffer des aliments préparés suivant la revendication 13, caractérisé en ce que le boîtier (30) présente un bord (48), muni d'un décrochement et assemblé fixement sur une extrémité, par l'intermédiaire d'un couvercle (31).

15. Dispositif pour chauffer des aliments préparés suivant l'une des revendications 13 et 14, caractérisé en ce que le dispositif de chauffage (40) peut être logé dans des griffes de fixation (32, 32'), prévues dans le boîtier (30).

16. Dispositif pour chauffer des aliments préparés suivant l'une quelconque des revendications précédentes, caractérisé en ce que le dispositif de chauffage (40) comporte un élément CTP (45) au moins, fixé sur une plaque de montage (41).

17. Dispositif pour chauffer des aliments préparés suivant la revendication 16, caractérisé en ce que le dispositif de chauffage (40) comporte deux corps d'accouplement (43, 43'), qui s'appliquent par des premières surfaces (et/ou surfaces inférieures) sur la plaque de montage (41), et présentent des surfaces de contact, perpendiculaires à ces dernières, entre lesquelles peut être fixé l'élément CTP.

18. Dispositif pour chauffer des aliments préparés suivant la revendication 17, caractérisé en ce que les corps d'accouplement (43, 43') sont respectivement reliés à un raccordement de ligne (46, 46'), et sont fixés sans isolation par rapport à l'élément CTP (45), mais avec une isolation par rapport à la plaque de montage (41).

19. Dispositif pour chauffer des aliments préparés suivant l'une des revendications 17 et 18, caractérisé en ce que les corps d'accouplement (43, 43') sont fixés sur la plaque de montage (41) et serrés mutuellement par des griffes de fixation (44, 44') plastiquement déformables, assemblées d'une seule pièce avec la plaque de montage (41).

20. Dispositif pour chauffer des aliments préparés suivant la revendication 19, caractérisé en ce que les corps d'accouplement (43, 43') présentent des sections de parois opposées à l'élément CTP (45), de forme convergente, vu à partir de la plaque de montage (41).

21. Dispositif pour chauffer des aliments préparés suivant l'une quelconque des revendications 17 à 20, caractérisé en ce qu'un film (50) en matériau isolant est disposé entre la plaque de montage (41), les griffes de fixation (44, 44') éventuellement, et les corps d'accouplement (43, 43') avec l'élément CTP (45).
